# EUROPEAN PATENT APPLICATION

(11) **EP 2 905 055 A1**
(43) Date of publication of application: **12.08.2015**
(21) Application number: 13843167.1
(22) Date of filing: 22.07.2013
(51) Int. Cl.: A63G 27/00

(54) **FERRIS WHEEL, UNITS THEREFOR AND DEVICE FOR INSTALLING SAME**

(30) Priority: 01.10.2012 RU 2012141629
(71) Applicant: Gnezdilov, Vladimir Alexeevich, Moscow 123182 (RU)
(72) Inventor: Gnezdilov, Vladimir Alexeevich, Moscow 123182 (RU)
(74) Representative: Sonn & Partner Patentanwälte
(86) International application number: PCT/RU2013/000629
(87) International publication number: WO 2014/054972

(57) **Abstract**

The inventions relate to the amusement industry. The Ferris wheel comprises a rotating structure 1 with radial members 2, passenger units 3 arranged in groups the circumferential distances therebetween exceed those between the passenger units within the groups, a drive and a station. The radial members 2 are made V-shaped in the plane normal to the plane of rotation of the rotating structure and are sequentially connected to one another by means of flexible elements 5. Branches 6 of the radial members are interconnected by flexible or by rigid elements 7. The radial members feature thrust rollers 8 fixed thereon with those rollers being intended to resist lateral loads (wind loads) and to possibly interact with arc-shaped (in the vertical plane) thrusts 9 mounted on trusses 10 that are secured on supports 11. The trusses 10 feature a station platform 12 suspended thereon.

## Description

### FIELD OF THE INVENTION

The present inventions relate to the amusement industry.

### DESCRIPTION OF THE PRIOR ART

It is known in the art a Ferris wheel comprising a rotating structure with a rim and radial members, further comprising passenger units arranged in groups the circumferential distances therebetween exceeding those between the passenger units within the groups, further comprising a drive and a station (see the RU patent No. 2438746 dtd. 10.01.2012).

The disadvantage of the known Ferris wheel is the complexity of its structure and a high consumption of materials due to passenger units being fixed on the rim and due to the use of material-demanding braces in the radial members.

It has formerly been proposed an axle of the Ferris wheel comprising sections located in bearing supports and sections connected with the elements of the rotating structure and having its middle section made in the form of a truss (see the RU patent No. 2172199 dtd. 20.08.2001).

The disadvantage of the known axle of said Ferris wheel is considerable metal consumption and difficulty of the said axle to be connected to the radial members of the rotating structure.

It has previously been suggested a station of the Ferris wheel comprising a platform (see the RU patent No. 2438746 dtd. 10.01.2012).

The disadvantageous feature of the known station is inconvenience of passengers loading into the passenger units or unloading thereout due to considerable vertical distance between the surface of the said station and the doorway of a passenger unit as well as insufficient safety of the ride guests due to the above-mentioned fact and due to the probability of people falling down on the surface beneath the passenger units. Moreover, the passenger units being constantly suspended creates additional load acting on the rotating structure which results in rim thereof being deformed in the area of the wheel drive location.

It has previously been suggested a supporting part of the wheel station comprising supports that carry the axle of the rotating structure (see the RU patent No. 2438746 dtd. 10.01.2012).

The disadvantage of the design of the known supporting part of the Ferris wheel is a considerable consumption of materials and its supports not being suitable to be used for fixing the station platform thereupon.

It has formerly been proposed a slave unit of the wheel drive comprising a toothed rack fixed upon the elements that are connected with the radial members of the rotating structure (see the RU patent No. 2127144).

The disadvantageous feature of the known slave unit is insufficient reliability and durability due to the increased wear of the said toothed rack and a toothed driving wheel and due to the lack of a device that prevents disengagement of the toothed wheel and the toothed rack.

It has been formerly proposed an apparatus for assembly of said Ferris wheel comprising a lifting gear (see the RU patent No. 2127144).

The disadvantage of the known apparatus is the use of special lifting devices which complicates the process of assembly.

### DISCLOSURE OF THE INVENTION

The technical result which the novel design of the Ferris wheel is to accomplish is intended to increase reliability thereof, to simplify the design and to reduce materials consumption.

The said technical result is accomplished by the fact that in the Ferris wheel, comprising a rotating structure with elements connected to the radial members, passenger units arranged in groups the circumferential distances therebetween exceeding those between the passenger units within the groups, further comprising supports, a drive and a station, the radial members are made V-shaped in the plane normal to the plane of rotation of the rotating structure and/or at least a portion of the radial members is made with V-shaped sections in the plane normal to the plane of rotation of the rotating structure and with end sections that carry corresponding groups of passenger units, with the elements connected to the radial members being made flexible.

The rotating structure may be made with elements that carry the toothed rack of the drive and that are arranged circumferentially, for example to make up a truss, with the flexible elements being located beyond the zone occupied by those circumferentially arranged elements.

The toothed rack may be made bracket-shaped in cross-section with a thrust surface on the base and with guide surfaces on the sides that carry pins with these surfaces interacting with a thrust roller and a guide roller respectively.

One portion of the flexible elements may be arranged diagonally and the other portion may be arranged sequentially along the outer circumference or the rotating structure may be made with rigid elements located along the outer circumference and carrying illumination when flexible elements are arranged diagonally.

End sections of the radial members are connected with adjacent radial members by means of flexible elements to ensure additional rigidity of the structure.

To increase the rigidity of a radial member the branches thereof are interconnected by means of rigid and/or flexible ties to increase its rigidity.

The ends of the axle of the rotating structure rest upon the pairs of supports oriented angularly to each other with one of those axle ends and/or a support-to-support joint being connected to the base by means of a thrust or both axle ends and/or support-to-support joints being connected to the base by means of flexible elements.

The platform of the station may be suspended to the trusses fixed on the supports and in order to simplify the process of the platform mounting the bottom ends of the supports located in the planes that are normal to the plane of rotation of the rotating structure are made nearer to each other.

The Ferris wheel may be provided with thrust rollers fixed on the trusses that carry the station platform or on the radial members with a possibility to interact with the thrust surfaces on the radial members or trusses respectively.

The Ferris wheel may be additionally provided with shelters fixed on the trusses that carry the station platform with a minimum possible gap relative to the narrow part of the rotating structure.

The platform of the station may be made with a profiled surface the middle part of which is made to enable the interaction with rolling-contact bearings mounted on the passenger units which may be made with turning gears that are synchronized with the drive and provided with torque-limiting clutches.

The technical result which the proposed axle of the Ferris wheel is to accomplish is intended to reduce metal consumption and to simplify the connection joint of the said axle to the radial members of the rotating structure.

The said result is attained by the fact that in the axle of the Ferris wheel comprising the end sections located within the bearing supports the middle section is made in the form of a truss.

Continuations of branches of V-shaped radial members of the rotating structure are crossed with the sections located within the bearing supports in order to reduce the load on the axle.

The technical result which the embodiments of the station are to accomplish is intended to increase the safety and reliability of the amusement ride.

The said technical result in the first embodiment is accomplished by suspending the station platform to the trusses fixed on the supports and making the said platform profiled in order to ensure the permissible tilt of a passenger unit when interacting with the bottom part thereof in the area of passengers loading-unloading.

The supporting surface of the platform may be made to enable interaction with the rolling bodies mounted in the front part and in the rear part of a passenger unit in accordance with the direction of movement thereof.

The trusses that carry the said platform may be provided with thrust rollers or may be made with thrust surfaces in order to interact with the thrust surfaces or rollers on the radial members of the rotating structure respectively.

The station may be provided with shelters that are fixed on the trusses that carry the platform with a minimum possible gap relative to the narrow part of the rotating structure.

In another embodiment of the station of the Ferris wheel comprising a platform in order to accomplish the technical result the said platform is suspended to the trusses fixed on the supports and provided with thrust rollers or thrust surfaces so that to interact with the thrust surfaces or rollers on the radial members of the rotating structure respectively.

Like in the first embodiment the supporting surface of the platform is made profiled to enable interaction of its middle portion with the rolling bodies mounted in the front part and in the rear part of a passenger unit in accordance with the direction of movement thereof.

The station may be provided with shelters that are fixed on the trusses that carry the platform with a minimum possible gap relative to the narrow part of the rotating structure.

The technical result which the proposed supporting part is to accomplish is intended to expand functionability thereof and to reduce materials consumption.

The said technical result is accomplished by the fact that in the supporting part of the Ferris wheel, comprising supports that carry the axle of the rotating structure, the ends of the axle of the rotating structure rest upon the pairs of supports oriented angularly to each other with one of the axle ends and/or a support-to-support joint being connected to the base by means of a thrust or both axle ends and/or support-to-support joints being connected to the base by means of flexible elements.

The bottom ends of the supports located in the planes that are normal to the plane of rotation of the rotating structure may be made nearer to each other.

The technical result which the proposed slave unit is to attain is intended to increase reliability and durability of the Ferris wheel drive.

The said technical result is attained by the fact that in the slave unit of the Ferris wheel drive, comprising a toothed rack secured on the elements that are connected to the radial members of the rotating structure, the elements fixed on the radial members make up a truss.

The toothed rack may be made bracket-shaped in cross-section with a thrust surface on the base and with guide surfaces on the sides that carry pins and with these surfaces interacting with a thrust roller and a guide roller respectively.

The technical result which a novel apparatus for the Ferris wheel assembly is to accomplish is intended to create an apparatus suitable for the use of the components of the Ferris wheel itself.

The said technical result is accomplished by the fact that a lifting gear is mounted on a platform connected with carrying elements that envelope the axle of the rotating structure and rest thereupon through rolling bodies with the drive of the Ferris wheel being used as a drive of the lifting gear.

### BRIEF DESCRIPTION OF THE DRAWINGS

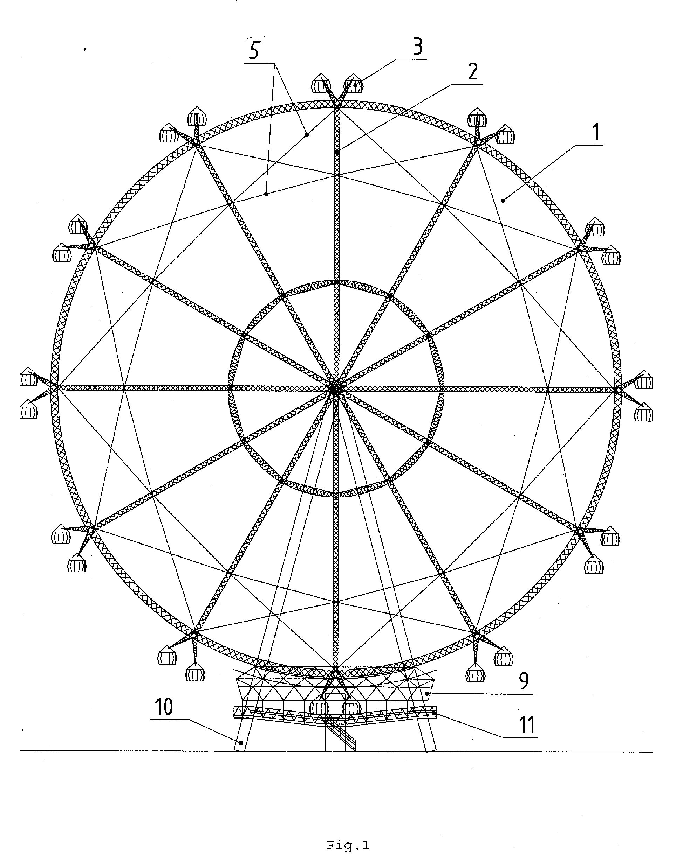

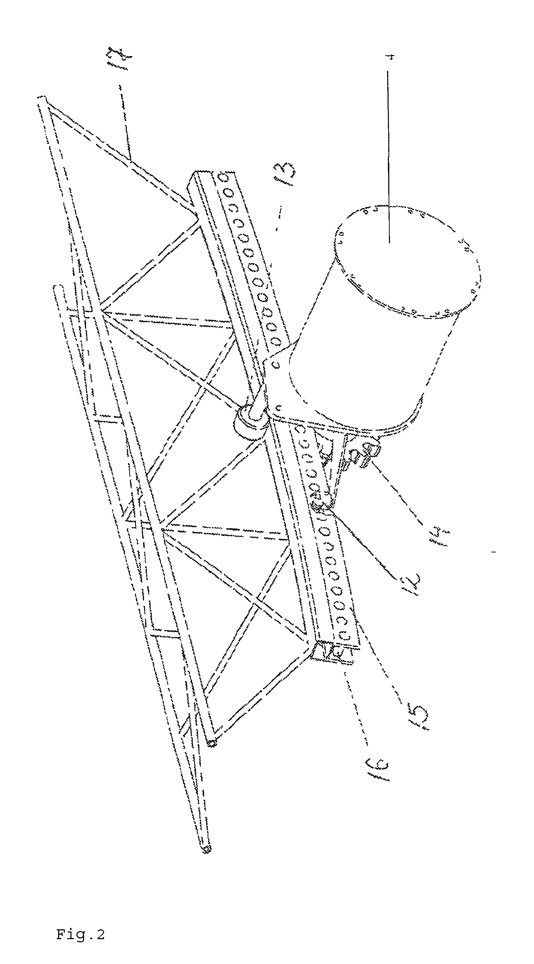

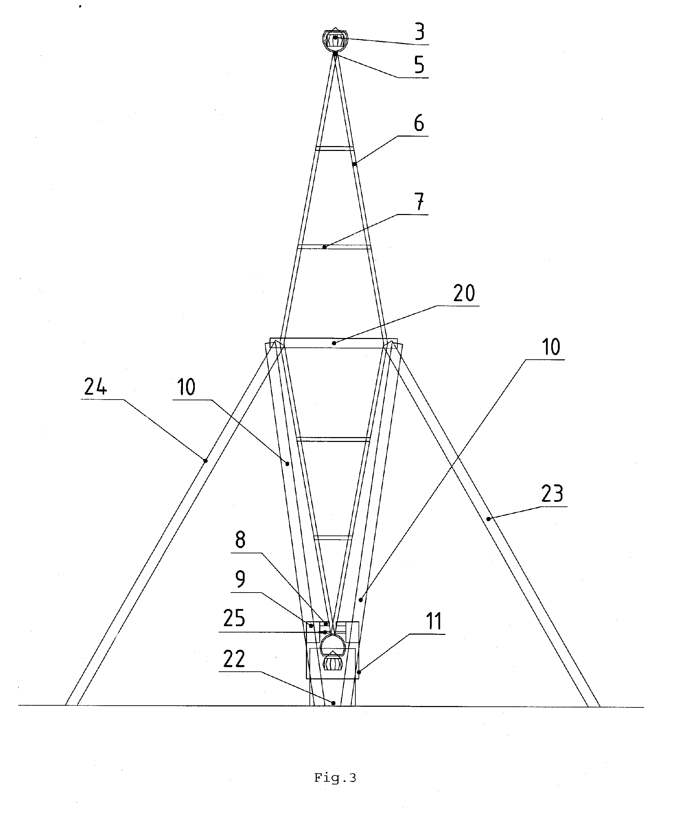

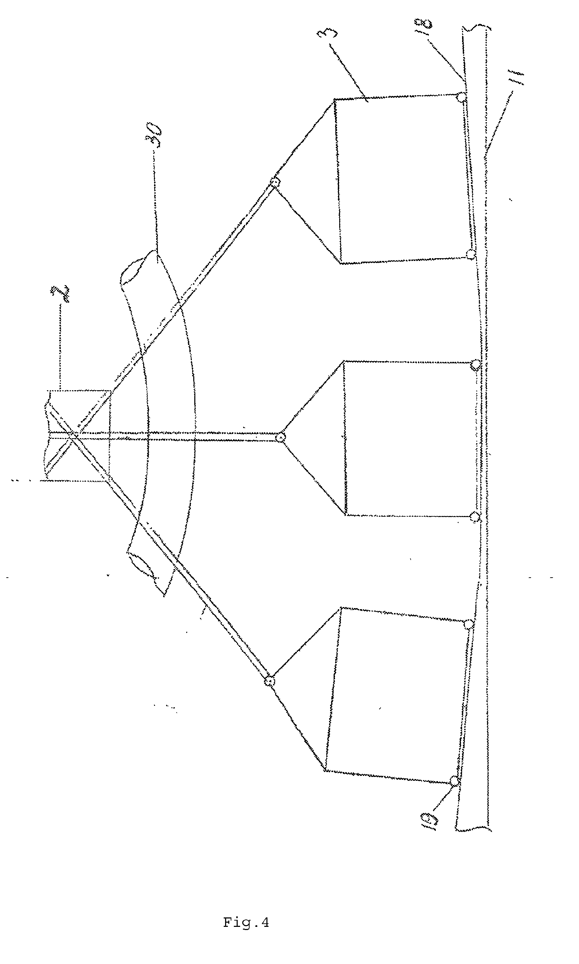

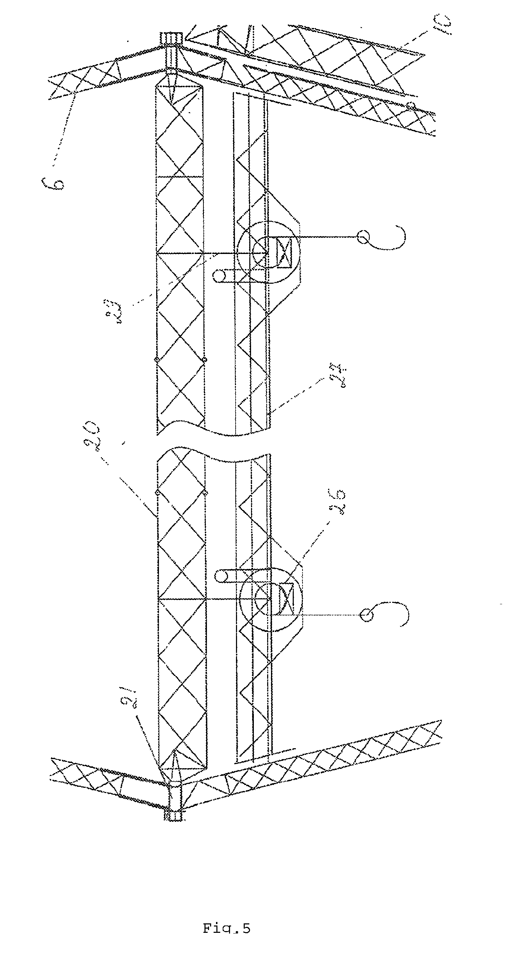

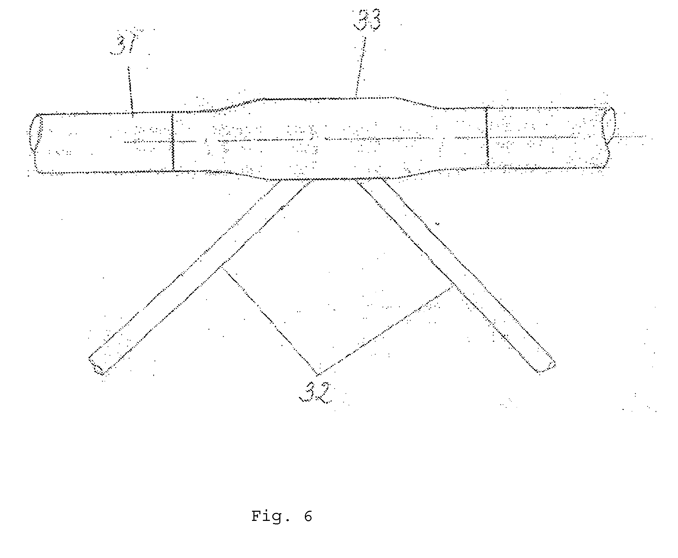

Fig. 1 is a schematic general view of the Ferris wheel; Fig. 2 is a view of the slave unit of the Ferris wheel; Fig. 3 is a schematic view of the supporting part of the Ferris wheel and the station thereof; Fig. 4 is a schematic view of passenger units when positioned in the area of passengers loading-unloading; Fig. 5 is a view of the apparatus for assembly of the Ferris wheel and the axle thereof; Fig. 6 is a fragmentary view of a truss structure.

### DESCRIPTION OF THE EMBODIMENTS

The Ferris wheel comprises a rotating structure 1 with radial members 2, passenger units 3 arranged in groups the circumferential distances therebetween exceeding those between the passenger units within the groups, a drive 4 and a station. The radial members 2 are made V-shaped in the plane normal to the plane of rotation of the rotating structure and are sequentially connected to one another by means of flexible elements 5. Branches 6 of the radial members are interconnected by flexible or by rigid elements 7. The radial members feature thrust rollers 8 fixed thereon with those rollers being intended to resist lateral loads (wind loads) and to possibly interact with arc-shaped (in the vertical plane) thrusts mounted on trusses 9 that are secured on supports 10. The trusses 9 feature a station platform 11 suspended thereon.

The drive of the Ferris wheel comprises a guide roller (rollers) 12 and a thrust roller (rollers) 13. The rollers 12 and 13 center a toothed driving wheel 14 relative to sides 15 of the toothed rack and stabilize the process of a toothed wheel 14 meshing with pins 16 of the toothed rack. The toothed rack is secured on a truss 17 that can be executed in the form of a ring or a polygon in the plane of rotation of the rotating structure.

The radial members 2 may also be made in the form of trusses.

When the passenger units are in the area of passengers loading-unloading there is an interaction of a profiled supporting surface 18 of the station platform 11 with rollers 19 of the passenger units 3. The rollers 19 may be made resilient or they may be elastically fixed on a passenger unit 3.

At the beginning of the area of passengers loading-unloading when the rollers 19 of the passenger unit 3 interact with the supporting surface 18 the passenger unit 3 first leans forward and then becomes horizontal and at the end of the loading-unloading area it leans backward. So the minimum distance between the lower part of the doorway of a passenger unit and the platform 11 remains the same throughout the entire process of passengers loading-unloading.

When the passenger units 3 interact with the station platform 11 a part of the passenger units' weight is being supported by the platform 11 and so the load acting on the rotating structure is partially decreased thereby.

The rotating structure has an axle with a middle section 20 that is made in the form of a truss and with the continuations of the branches 6 of the V-shaped radial members 2 of the rotating structure are being crossed with sections 21 of the axle that are located within bearing supports thereby reducing the bending loads acting on the axle. Making the axle with the section 20 in the form of a truss and the branches 6 of the radial members 2 in the form of trusses considerably increases reliability of the rotating structure since the axle-to-branches 6 connection permits to create a single truss structure.

Bearing supports are being connected with the pairs of supports 10 that in each pair are oriented angularly to each other in the corresponding plane. The bottom ends 22 of the supports 10 located in the planes normal to the plane of rotation of the rotating structure are brought nearer to each other. In order to make the supports 10 more stable at least one thrust 23 is used or flexible elements 24 fixed on the base and on the support-to-support 10 joints are used.

In order to prevent people being hit by falling objects the station of the Ferris wheel is made with shelters 25 that are fixed on trusses 9.

The passenger units 3 are made with turning gears that are synchronized with the drive and provided with torque-limiting clutches (not shown in the drawings). Use of the turning gears in the passenger units 3 makes it possible to prevent swinging of the gondolas and to increase safety of the Ferris wheel.

For the purpose of the Ferris wheel assembly one can use an apparatus comprising a lifting gear 26 mounted on a platform 27 which is connected with load-bearing elements 29 enveloping the axle of the rotating structure 1 and resting thereupon through the rolling bodies (not shown in the drawing).

The drive of the Ferris wheel is used as a drive of the lifting gear 26 with the toothed wheel 14 having been taken off and a pulley or some other device having been fixed to the shaft of the drive.

Use of the flexible elements 5 which interconnect the radial members 2 in the Ferris wheel considerably lightens the rotating structure and permits to optimally distribute loads among the constituent parts thereof without using any material-demanding rim as well as simplifies the process of the Ferris wheel assembly.

For mounting of illumination elements it is possible to use a lightweight ringshaped element 30 instead of the load-bearing rim.

To further lighten the Ferris wheel all the truss structures thereof may have tubular carrying elements 31 with thicker walls in the places of their connection with additional rod elements 32. The tubular elements 31 are provided with welded-in parts 33 that are intended for connection with the additional rod elements 32. The welded-in parts 33 have thicker walls which in some cases implies that they have larger outer diameter.

### INDUSTRIAL APPLICABILITY

The proposed Ferris wheel and subassemblies thereof consist of known elements and mechanisms the ability of which to be manufactured has been confirmed by many years' experience in operation of various Ferris wheels and other items of the art. The specific feature of the proposed Ferris wheel and subassemblies thereof does not create any insuperable technical problems.

## Claims

1. A Ferris wheel comprising a rotating structure with elements connected to the radial members, further comprising passenger units arranged in groups the circumferential distances therebetween exceed those between the passenger units within the groups, further comprising supports, a drive and a station, wherein said radial members are made V-shaped in the plane normal to the plane of rotation of the rotating structure and also made with end sections that carry corresponding groups of passenger units, and wherein the elements connected to said radial members are made flexible.

2. The Ferris wheel according to claim 1 wherein said rotating structure is made with elements that carry the toothed rack of the drive and that are arranged circumferentially and wherein the flexible elements are located beyond the zone occupied by said circumferentially arranged elements.

3. The Ferris wheel according to claim 2 wherein said circumferentially arranged elements make up a truss.

4. The Ferris wheel according to claim 2 or 3 wherein said toothed rack is made bracket-shaped in cross-section with a thrust surface on the base and with guide surfaces on the sides that carry pins and with these surfaces interacting with a thrust roller and a guide roller respectively.

5. The Ferris wheel according to any of claims 1-3 wherein one portion of said flexible elements is arranged diagonally and the other portion is arranged sequentially along the outer circumference or wherein the rotating structure is made with rigid elements being located along the outer circumference and carrying illumination when flexible elements are arranged diagonally.

6. The Ferris wheel according to claim 5 wherein the end sections of the radial members are connected with adjacent radial members by means of flexible elements.

7. The Ferris wheel according to claim 1 wherein the branches of a radial member are interconnected by rigid and/or flexible ties.

8. The Ferris wheel according to claim 1 wherein the ends of the axle of the rotating structure rest upon the pairs of supports oriented angularly to each other with one of said axle ends and/or a support-to-support joint being connected to the base by means of a thrust or both axle ends and/or support-to-support joints being connected to the base by means of flexible elements.

9. The Ferris wheel according to claim 8 wherein bottom ends of the supports located in the planes that are normal to the plane of rotation of the rotating structure are made nearer to each other.

10. The Ferris wheel according to claim 1 wherein the platform of the station is suspended to the trusses that are fixed on the supports.

11. The Ferris wheel according to claim 10 wherein thrust rollers are provided and fixed on the trusses that carry the station platform or on the radial members with a possibility to interact with the thrust surfaces on the radial members or trusses respectively.

12. The Ferris wheel according to claim 10 wherein shelters are provided and fixed on the trusses that carry the station platform with a minimum possible gap relative to the narrow part of the rotating structure.

13. The Ferris wheel according to claim 1 or 10 wherein the platform of the station is made with a profiled surface the middle part of which is made to enable the interaction with rolling-contact bearings mounted on the passenger units.

14. The Ferris wheel according to claim 1 wherein said passenger units are made with turning gears that are synchronized with the drive and provided with torque-limiting clutches.

15. The axle of the rotating structure of the Ferris wheel comprising end sections located within the bearing supports wherein the middle section is made in the form of a truss.

16. The axle of the Ferris wheel according to claim 15 wherein the sections located within the bearing supports are crossed by the continuations of the branches of V-shaped radial members of the rotating structure.

17. The station of the Ferris wheel comprising a platform
wherein said platform is suspended to the trusses fixed on the supports and wherein said platform is made profiled in order to ensure the permissible tilt of a passenger unit when interacting with the bottom part thereof in the area of passengers loading-unloading.

18. The station according to claim 17 wherein the supporting surface of said platform is made to enable interaction with the rolling bodies mounted in the front part and in the rear part of a passenger unit in accordance with the direction of movement thereof.

19. The station according to claim 17 or 18 wherein the trusses that carry said platform are provided with thrust rollers or made with thrust surfaces in order to interact with the thrust surfaces or rollers on the radial members of the rotating structure respectively.

20. The station according to claim 17 or 18 wherein shelters are provided and fixed on the trusses that carry the platform with a minimum possible gap relative to the narrow part of the rotating structure.

21. The station of the Ferris wheel comprising a platform wherein said platform is suspended to the trusses fixed on the supports and wherein said supports are provided with thrust rollers or thrust surfaces so that to interact with the thrust surfaces or rollers on the radial members of the rotating structure respectively.

22. The station according to claim 21 wherein the supporting surface of said platform is made profiled to enable interaction of the middle portion thereof with the rolling bodies mounted in the front part and in the rear part of a passenger unit in accordance with the direction of movement thereof.

23. The station according to claim 20 or 21 wherein shelters are provided and fixed on the trusses that carry the platform with a minimum possible gap relative to the narrow part of the rotating structure.

24. The supporting part of the Ferris wheel comprising supports that carry the axle of the rotating structure wherein the ends of said axle of the rotating structure rest upon the pairs of supports oriented angularly to each other with one of said axle ends and/or a support-to-support joint being connected to the base by means of a thrust or both axle ends and/or support-to-support joints being connected to the base by means of flexible elements.

25. The supporting part of the Ferris wheel according to claim 24 wherein the bottom ends of the supports located in the planes that are normal to the plane of rotation of the rotating structure are made nearer to each other.

26. The slave unit of the Ferris wheel comprising a toothed rack secured on the elements that are connected to the radial members of the rotating structure wherein the elements fixed on the radial members make up a truss.

27. The slave unit of the Ferris wheel according to claim 26 wherein said toothed rack is made bracket-shaped in cross-section with a thrust surface on the base and with guide surfaces on the sides that carry pins and with these surfaces interacting with a thrust roller and a guide roller respectively.

28. An apparatus for assembly of the Ferris wheel comprising a lifting gear wherein said lifting gear is mounted on a platform connected with carrying elements that envelope the axle of the rotating structure and rest thereupon through rolling bodies.

29. The apparatus for assembly of the Ferris wheel according to claim 28 wherein the drive of the Ferris wheel is used as a drive of said lifting gear.
